# EUROPEAN PATENT APPLICATION

(11) **EP 3 501 283 A1**
(43) Date of publication of application: **26.06.2019**
(21) Application number: 17208590.4
(22) Date of filing: 19.12.2017
(51) Int. Cl.: A01N 37/02, A01N 37/16, A01N 59/00, A01N 59/26, A01D 43/14, A01D 45/10, A01G 22/55

(54) **COMPOSITIONS AND METHODS FOR INCREASING SUGAR YIELD FROM HARVESTED SUGAR CANE**

(71) Applicant: Ecolab USA Inc., St. Paul, MN 55102 (US)
(72) Inventor: Ferry, Adolfo Antenor Diaz, Managua (NI); Sandoval, Rodrigo Jose Ordonez, Managua (NI)
(74) Representative: Godemeyer Blum Lenze Patentanwälte Partnerschaft mbB - werkpatent

(57) **Abstract**

Compositions and methods for increasing sugar yield from harvested sugar cane are described. Antimicrobial compositions are applied to freshly cut sugar cane to increase sugar yield. Without being bound by theory, it is believed that the peracid-containing compositions serve to prevent microbial contamination between harvest and processing in a mill. The peracid-containing compositions inhibit bacterial metabolic activity which converts sucrose found in sugar cane juice into dextran. Preventing production of dextran improves sucrose yields and purity in treated sugar cane.

## Description

### FIELD

The present disclosure relates to compositions and method for increasing sugar yield from harvested sugar cane. In particular, the disclosed compositions and methods provide immediate control of environmental bacteria that can reduce the sucrose yield of cut sugar cane by applying antimicrobial treatment immediately after cutting during harvest.

### BACKGROUND

Sugar cane is the largest source of sucrose in the world. Sugar cane is the common term for various species of grasses in the genus *Saccharum.* It is harvested by cutting the stalks at the base just above ground level. This can be done manually or with mechanical harvesters. After harvesting, the sugar cane is quickly transported to mills for processing. Sucrose (cane sugar) is produced from the cane juice. Ethanol can be formed by fermenting the sucrose for alcohol or fuel.

From the time the sugar cane is cut, the sucrose content of the cane begins to deteriorate rapidly due to microbial conversion of sucrose into dextran. In particular, *Leuconostoc mesenteroide,* and *Weissellia confuse* have been identified as bacterial species that cause most sucrose degradation in sugar cane. Once the cut sugar cane arrives at the mill, various chemical treatments are applied to the pressed cane juice to control degradation of sucrose. However, there remains a need to reduce or prevent degradation of sucrose from the time the cane is harvested in the field to the time the cane juice is extracted in the mill. Preventing degradation of sucrose before cane arrives at the mill will improve overall sugar yields.

It is against this background that the present disclosure is made.

### SUMMARY

The present disclosure relates to compositions and methods for treating harvested sugar cane to reduce microbial contamination. Microbial control treatments are immediately applied to the cut sugar cane to prevent bacteria from infecting the sugar juice while the cane is being transported to a processing mill. Preventing microbial contamination also prevents conversion of sucrose into dextran, which thereby reduces sugar purity. Treatment of the sugar cane with peracid-containing compositions improves the overall sucrose yield of the cane by reducing the amount of sucrose that is converted to dextran.

In one aspect, a method of increasing sucrose yield from sugar cane is provided. A peracid antimicrobial composition is applied to the cut sugar cane. The peracid antimicrobial composition comprises from about 1250 to about 6300 ppm carboxylic acid; from about 600 to 3050 ppm peroxycarboxylic acid; from about 450 to about 2250 ppm peroxide; from about 0 to about 150 ppm chelating agent and water. The peracid antimicrobial composition can further include additional agents selected from chelating agents, organic solvents, sanitizers, antimicrobial agents, magnesium, rheological, pH modifiers, preservatives, processing aids, or other functional ingredients. In some embodiments, the peracid antimicrobial composition is applied to the cut sugar cane within up to 2 hours of harvesting, or within up to 15 minutes of harvesting.

In some aspects, the peracid antimicrobial composition comprises from about 1950 to about 5150 ppm carboxylic acid; from about 950 to 2500 ppm peroxycarboxylic acid; from about 700 to about 1850 ppm peroxide; from about 65 to about 165 ppm chelating agent; and water. The carboxylic acid in the antimicrobial composition may be selected from the group consisting of formic acid, acetic acid, propionic acid, heptanoic acid, octanoic acid, nonanoic acid, decanoic acid, benzoic acid, and salicyclic acid. In some embodiments, the carboxylic acid is acetic acid or a combination of acetic acid and octanoic acid. The peroxycarboxylic acid may be peroxyacetic acid, peroxyoctanoic acid, or a combination thereof. In some aspects, the peroxide is hydrogen peroxide. In some aspects the chelating agent comprises phosphonic acid. In some embodiments, the peracid antimicrobial composition further comprises a thickening agent selected from the group consisting of xantham gum, guar gum, arrowroot, cornstarch, katakuri starch, potato starch, tapioca, sago, alginin, locust bean gum, collagen, gelatin, agar, carrageenan pectin, cellulose, and gum Arabic.

In another aspect, a method of increasing sucrose yield in harvested sugar cane comprises diluting a concentrate composition at a rate of 1:50 to 1:2000 with water to form a use solution. The concentrate composition comprises from about 5 to about 60 wt-% carboxylic acid; from about 4 to about 30 wt-% peroxycarboxylic acid; and from about 5 to about 30 wt-% peroxide. The use solution is applied to sugar cane within up to 12 hours of cutting the sugar cane. In some embodiments, the carboxylic acid comprises one or more of formic acid, acetic acid, propionic acid, heptanoic acid, octanoic acid, nonanoic acid, decanoic acid, benzoic acid, and salicyclic acid. In some aspects, the carboxylic acid comprises from 30 to 60 wt-% acetic acid. In some embodiments, the peroxide comprises from 10 to 25 wt-% hydrogen peroxide. The diluted use solution may be applied by one or more of spraying, dripping, immersing, misting, or dunking. In some aspects, applying occurs within 0.1 seconds to 8 minutes of cutting or within 1 second to 6 hours of cutting the sugar cane. In some embodiments, the applying is performed by spraying with an applicator affixed to a sugar cane harvester. In other embodiments, the applying is performed manually by spraying the cut cane with a handheld or backpack spraying device. In some embodiments, the concentrate composition further comprises a chelating agent. In some aspects, the concentrate composition is diluted at a rate of 1:125-1:400 with water to form the use solution. In some aspects, the carboxylic acid comprises octanoic acid and acetic acid and the peroxycarboxylic acid comprises peroxyoctanoic acid and peroxyacetic acid. In some embodiments, the concentrate composition further comprises an additional antimicrobial selected from the group consisting of enzymes, bactericides, phages, and bacteriocins.

In yet another aspect, a method is provided for increasing sucrose yield from harvested sugar cane by applying a use solution comprising from about 950 to 2500 ppm peroxycarboxylic acid to sugar cane within up to 4 hours of cutting the sugar cane. The use solution may be applied to the cut sugar cane with a spraying apparatus affixed to a sugar cane harvester or manually to cut sugar cane with a handheld or backpack spraying device. In some aspects, the use solution is applied to the cut sugar cane within about 30 minutes of harvesting. In some embodiments, the peroxycarboxylic acid is selected from the group consisting of peroxyacetic acid, peroxyoctanoic acid, performic acid, a sulfonated peroxycarboxylic acid, and mixtures thereof. In some aspects, the peroxycarboxylic acid comprises 900 ppm to 1100 ppm peroxyacetic acid or 2250 ppm to 2600 ppm peroxyacetic acid.

In one aspect, a system for increasing sucrose yield from sugar cane is provided. The system includes a sugar cane harvester having an elevator. An antimicrobial solution reservoir is affixed to the sugar cane harvester and the antimicrobial solution reservoir contains an antimicrobial solution that inhibits degradation of sucrose. A spraying apparatus in fluid connection with the antimicrobial solution reservoir is attached to the elevator. The antimicrobial solution may be selected from the group consisting of quaternary ammonium compounds, electrolyzed water, essential oils with antimicrobial efficacy, ozonized water generated onsite, chlorine dioxide, peracids, hydrogen peroxide, silver-containing compounds, phages, bacteriocins, enzymes, and sodium hypochlorite. The antimicrobial solution may further comprise a thickening agent.

In some embodiments, the antimicrobial solution used with the system comprises from about 1800 to about 2200 ppm acetic acid; from about 900 to 1100 ppm peroxyacetic acid; from about 650 to about 800 ppm hydrogen peroxide; from about 60 to about 70 ppm phosphonic acid chelating agent; and water. In other embodiments, the antimicrobial solution used with the system comprises from about 4700 to about 5400 ppm acetic acid; from about from about 2250 to about 2600 ppm peroxyacetic acid; from about 1650 to about 1950 ppm hydrogen peroxide; from about 150 to about 170 ppm phosphonic acid chelating agent; and water. In either of these embodiments, the antimicrobial solution can further include an additional carboxylic acid and peroxycarboxylic acid. The antimicrobial solution can further include an additional antimicrobial agent selected from the group consisting of disodium cyanodithiomidocarbonate, ethylenediamine, potassium N-methyldithiocarbamate, disodium ethylenebisdithiocarbamate, sodium dimethyldithiocarbamate, potassium N-methyldithiocarbamate, 2,2-Dibromo-3-nitrilopropionamine, and benzyl ammonium chloride.

The invention relates to the following aspects:
1. A method of increasing sucrose yield from harvested sugar cane, the method comprising:
   applying a peracid antimicrobial composition to the cut sugar cane, the peracid antimicrobial composition comprising:
      from about 1250 to about 6300 ppm carboxylic acid;
      from about 600 to 3050 ppm peroxycarboxylic acid;
      from about 450 to about 2250 ppm peroxide;
      from about 0 to about 150 ppm chelating agent and
      water.
2. The method of aspect 1, wherein the peracid antimicrobial composition further comprises additional agents selected from chelating agents, organic solvents, sanitizers, antimicrobial agents, magnesium, rheological, pH modifiers, preservatives, processing aids, or other functional ingredients
3. The method according to aspect 1 or 2, wherein the peracid antimicrobial composition is applied to the cut sugar cane within up to 2 hours of harvesting.
4. The method according to aspect 1 or 2, wherein the peracid antimicrobial composition is applied to the cut sugar cane within up to 15 minutes of harvesting.
5. The method according to any one of aspects 1 to 4, wherein the peracid antimicrobial composition comprises:
   from about 1950 to about 5150 ppm carboxylic acid;
   from about 950 to 2500 ppm peroxycarboxylic acid;
   from about 700 to about 1850 ppm peroxide;
   from about 65 to about 165 ppm chelating agent; and
   water.
6. The method according to any one of aspects 1 to 5, wherein the carboxylic acid is selected from the group consisting of formic acid, acetic acid, propionic acid, heptanoic acid, octanoic acid, nonanoic acid, decanoic acid, benzoic acid, and salicyclic acid.
7. The method of aspect 6, wherein the carboxylic acid comprises acetic acid.
8. The method of aspect 7, wherein the carboxylic acid further comprises octanoic acid.
9. The method according to any one of aspects 1 to 8, wherein the peroxycarboxylic acid comprises peroxyacetic acid, peroxyoctanoic acid, or a mixture thereof.
10. The method according to any one of aspects 1 to 9, wherein the peroxide comprises hydrogen peroxide.
11. The method according to any one of aspects 1 to 10, wherein the chelating agent comprises phosphonic acid.
12. The method according to any one of aspects 1 to 11, wherein the peracid antimicrobial composition further comprises a thickening agent selected from the group consisting of xantham gum, guar gum, arrowroot, cornstarch, katakuri starch, potato starch, tapioca, sago, alginin, locust bean gum, collagen, gelatin, agar, carrageenan pectin, cellulose, and gum Arabic.
13. A method for increasing sucrose yield in harvested sugar cane, the method comprising:
   diluting a concentrate composition at a rate of 1:50-1:2000 with water to form a use solution, the concentrate composition comprising:
      from about 5 to about 60 wt-% carboxylic acid;
      from about 4 to about 30 wt-% peroxycarboxylic acid; and
      from about 5 to about 30 wt-% peroxide; and
   applying the use solution to sugar cane within up to 24 hours of cutting the sugar cane.
14. The method of aspect 13, wherein the carboxylic acid comprises one or more of formic acid, acetic acid, propionic acid, heptanoic acid, octanoic acid, nonanoic acid, decanoic acid, benzoic acid, and salicyclic acid.
15. The method of aspect 13, wherein the carboxylic acid comprises from 30 to 60 wt-% acetic acid.
16. The method according to any one of aspects 13 to 15, wherein the peroxide comprises from 10 to 25 wt-% hydrogen peroxide.
17. The method according to any one of aspects 13 to 16, wherein the diluted use solution is applied by one or more of spraying, dripping, immersing, misting, or dunking.
18. The method according to any one of aspects 13 to 17, wherein the applying occurs within 0.1 seconds to 8 minutes of cutting.
19. The method according to any one of aspects 13 to 17, wherein the applying occurs within 1 second to 6 hours of cutting.
20. The method according to any one of aspects 13 to 19, wherein the applying is performed by spraying with an applicator affixed to a sugar cane harvester.
21. The method according to any one of aspects 13 to 19, wherein the applying is performed manually by spraying the cut cane with a handheld or backpack spraying device.
22. The method according to any one of aspects 13 to 21, wherein the concentrate composition further comprises a chelating agent.
23. The method according to any one of aspects 13 to 22, wherein the concentrate composition is diluted at a rate of 1:125-1:400 with water to form the use solution.
24. The method according to any one of aspects 13 and 16 to 23, wherein the carboxylic acid comprises octanoic acid and acetic acid and the peroxycarboxylic acid comprises peroxyoctanoic acid and peroxyacetic acid.
25. The method according to any one of aspects 13 to 24, wherein the concentrate composition further comprises an additional antimicrobial selected from the group consisting of enzymes, bactericides, phages, and bacteriocins.
26. A method for increasing sucrose yield from harvested sugar cane, the method comprising:
   applying a use solution comprising from about 950 to 2500 ppm peroxycarboxylic acid to sugar cane within up to 4 hours of cutting the sugar cane.
27. The method of aspect 26, wherein the use solution is applied to the cut sugar cane with a spraying apparatus affixed to a sugar cane harvester.
28. The method of aspect 26, wherein the use solution is manually applied to the cut sugar cane with a handheld or backpack spraying device.
29. The method according to any one of aspects 26 to 28, wherein the use solution is applied to the cut sugar cane within about 30 minutes of harvesting.
30. The method according to any one of aspects 26 to 29, wherein the peroxycarboxylic acid is selected from the group consisting of peroxyacetic acid, peroxyoctanoic acid, performic acid, a sulfonated peroxycarboxylic acid, and mixtures thereof.
31. The method according to any one of aspects 26 to 29, wherein the peroxycarboxylic acid comprises 900 ppm to 1100 ppm peroxyacetic acid.
32. The method according to any one of aspects 26 to 29, wherein the peroxycarboxylic acid comprises 2250 ppm to 2600 ppm peroxyacetic acid.
33. A system for increasing sucrose yield in sugar cane comprising:
   a sugar cane harvester having an elevator;
   an antimicrobial solution reservoir affixed to the sugar cane harvester, the antimicrobial solution reservoir containing an antimicrobial solution that inhibits degradation of sucrose; and
   a spraying apparatus in fluid connection with the antimicrobial solution reservoir attached to the elevator.
34. The system of aspect 33, wherein the antimicrobial solution is selected from the group consisting of quaternary ammonium compounds, electrolyzed water, essential oils with antimicrobial efficacy, ozonized water generated onsite, chlorine dioxide, peracids, hydrogen peroxide, silver-containing compounds, phages, bacteriocins, enzymes, and sodium hypochlorite.
35. The system of aspect 33, wherein the antimicrobial solution comprises:
   from about 1800 to about 2200 ppm acetic acid;
   from about 900 to 1100 ppm peroxyacetic acid;
   from about 650 to about 800 ppm hydrogen peroxide;
   from about 60 to about 70 ppm phosphonic acid chelating agent; and
   water.
36. The system of aspect 33, wherein the antimicrobial solution comprises:
   from about 4700 to about 5400 ppm acetic acid;
   from about 2250 to about 2600 ppm peroxyacetic acid;
   from about 1650 to about 1950 ppm hydrogen peroxide;
   from about 150 to about 170 ppm phosphonic acid chelating agent; and
   water.
37. The system according to any one of aspects 33 to 36, wherein the antimicrobial solution further comprises a thickening agent.
38. The system according to aspect 35 or 36, wherein the antimicrobial solution further comprises an additional carboxylic acid and peroxycarboxylic acid.
39. The system according to any one of aspects 33 to 37, wherein the antimicrobial solution further comprises an additional antimicrobial agent selected from the group consisting of disodium cyanodithiomidocarbonate, ethylenediamine, potassium N-methyldithiocarbamate, disodium ethylenebisdithiocarbamate, sodium dimethyldithiocarbamate, potassium N-methyldithiocarbamate, 2,2-Dibromo-3-nitrilopropionamine, and benzyl ammonium chlorides.

### BRIEF DESCRIPTION OF FIGURES

FIG. 1 is a schematic diagram of an exemplary apparatus for applying an antimicrobial composition to sugar cane during harvesting.
FIG. 2 is a bar graph depicting the average ppm of dextran per mass of solids produced in sugar cane treated with a peracid-containing antimicrobial composition compared to untreated sugar cane.
FIG. 3 is a bar graph depicting the average sugar cane juice purity produced by sugar cane treated with a peracid-containing antimicrobial composition compared to untreated sugar cane.
FIG. 4 is a scatter graph depicting purity vs. dextran content of sugar cane treated with a peracid-containing antimicrobial composition compared to untreated sugar cane.
FIG. 5 is a bar graph depicting the average sucrose yield produced by sugar cane treated with a peracid-containing antimicrobial composition compared to untreated sugar cane.
FIG. 6 is a scatter graph depicting yield vs. dextran content of sugar cane treated with a peracid-containing antimicrobial composition compared to untreated sugar cane.

### DETAILED DESCRIPTION

Compositions and methods are described herein for reducing microbial contamination of cut sugar cane and thus preventing conversion of sucrose in the cane juice of the sugar cane into dextran by metabolic activity of bacteria. Application of an antimicrobial composition to freshly harvested sugar cane inhibits degradation of sucrose, improving overall yields and purity. A sufficient amount of antimicrobial composition is applied to provide microbial control for a period of time such that cut cane delivered to a mill for further processing arrives with higher yield potential.

The compositions and methods provided herein are effective for increasing the yield potential of not only sucrose production, but also ethanol production. Sucrose can be fermented to produce ethanol. In some embodiments, sucrose is fermented to produce alcoholic beverages such as rum. In other embodiments, sucrose is fermented to produce ethanol fuel. Regardless of the use of the ethanol, the process of fermentation follows the same steps. First, the sucrose is cleaved into glucose and fructose. The glucose is then broken down into pyruvate which is then converted to ethanol and carbon dioxide. Improvements in sucrose yield and purity can lead to a cleaner, more productive fermentation process. Additionally, antimicrobial treatment can eliminate acid producing bacteria that can stymie the fermentation process.

The compositions preferably include only ingredients that can be employed in food products or in food transport, handling, or processing, for example, according to government rules and regulations.

As used herein, weight percent (wt-%), percent by weight, % by weight, and the like are synonyms that refer to the concentration of a substance as the weight of that substance divided by the total weight of the composition and multiplied by 100.

As used herein, the terms "mixed" or "mixture" when used relating to "peroxycarboxylic acid composition" or "peroxycarboxylic acids" refer to a composition or mixture including more than one peroxycarboxylic acid, such as a composition or mixture including peroxyacetic acid and peroxyoctanoic acid.

As used herein, the term "active" when applied to a peroxycarboxylic acid or another peroxy containing compound refers to the wt-% of peroxycarboxylic acid or peroxy compound in the composition that can be detected by a suitable analytical technique, for example, by titration, chromatography, spectroscopy, oxidation-reduction probe, amperometrically, or similar peracid detection method.

As used herein, the term "about" modifying the quantity of an ingredient in the disclosed compositions or employed in the disclosed methods refers to variation in the numerical quantity that can occur, for example, through typical measuring and liquid handling procedures used for making concentrates or use solutions in the real world; through inadvertent error in these procedures; through differences in the manufacture, source, or purity of the ingredients employed to make the compositions or carry out the methods; and the like. The term about also encompasses amounts that differ due to different equilibrium conditions for a composition resulting from a particular initial mixture. Whether or not modified by the term "about", the claims include equivalents to the quantities.

As used herein, a composition or combination "consisting essentially" of certain ingredients refers to a composition including those ingredients and lacking any ingredient that materially affects the basic and novel characteristics of the composition or method.

### Compositions

Compositions of the present disclosure provide a concentrate and diluted end use composition that include a sufficient quantity of chemistry to control microbial conversion of sucrose to dextran on cut sugar cane for a period of time between harvesting the sugar cane and processing the sugar cane at a mill. In one embodiment the composition is a peroxycarboxylic acid concentrate that is diluted before applying to cut sugar cane. More than one carboxylic and peroxycarboxylic acid can be included in the composition. Additional auxiliary agents can be included in the composition to provide additional benefits such as defoaming or stabilization properties. In other embodiments, other antimicrobial compositions can be utilized such as sodium hypochlorite, quaternary ammonium compounds, and essential oils.

The peracid compositions are effective for controlling microbial contamination of freshly harvested sugar cane. The peracids compositions beneficially do not have residual antimicrobial activity on the sugar cane to affect food safety because the peracids naturally break down into water, oxygen, and acid. Thus, the composition does not need to be rinsed from the sugar cane after treatment.

### Carboxylic Acids and Peroxycarboxylic Acids

In exemplary embodiments, the composition includes effective amounts of peracids, also known as peroxyacids or peroxycarboxylic acids.

The antimicrobial composition includes one or more carboxylic acids. Generally, carboxylic acids have the formula R-COOH wherein the R may represent any number of different groups including aliphatic groups, alicyclic groups, aromatic groups, heterocyclic groups, all of which may be saturated or unsaturated as well as substituted or unsubstituted. Carboxylic acids also occur having one, two, three, or more carboxyl groups.

Carboxylic acids which are generally useful in the disclosed compositions and methods are those which comprise peroxycarboxylic acids. Peroxycarboxylic acids generally have the formula R(CO₃H)N, where R is an alkyl, arylalkyl, cycloalkyl, carboxy alkyl, carboxyester alkyl, aromatic or heterocyclic group, and N is one or two, or named by prefixing the parent acid with peroxy. Preferably, the carboxylic acid and peroxycarboxylic acid have a primary carbon chain of 2 to 12. The primary alkyl or aryl chain is that carbon chain of the molecule having the greatest length of carbon atoms and directly appending carboxyl functional groups. Examples of suitable carboxylic acids include acetic acid, propionic acid, formic acid, hexanoic acid, heptanoic acid, octanoic acid, nonanoic acid, decanoic acid, benzoic acid, salicylic acid, and mixtures thereof. Longer chain carboxylic acid analogues, including hexanoic, heptanoic, octanoic, nonanoic, and decanoic, can be additionally antimicrobial and reduce surface tension to assist in wetting of hydrophobic surfaces. Preferred peroxycarobxylic acids include peroxyacetic acid, peroxypropionic acid, peroxyoctanoic acid, peroxyformic acid, peroxyglycolic acid, peroxysuccinic acid, or mixtures thereof.

Peroxycarboxylic acids can be made by the direct, acid catalyzed equilibrium action of hydrogen peroxide with the carboxylic acid, by autoxidation of aldehydes, from acid chlorides, and hydrides, or carboxylic anhydrides with hydrogen or sodium peroxide, from electrolytic cells, and through the use of a catalyst such as an enzyme.

In some embodiments, the peroxycarboxylic acid is or includes a sulfoperoxycarboxylic acids or "sulfonated peroxycarboxylic acids." Sulfoperoxycarboxylic acids are the peroxycarboxylic acid form of a sulfonated carboxylic acid. Preferred sulfoperoxycarboxylic acids include 9, 10-dihydroxy-9-sulfooctadecaneperoxoic acid, 10-hydroxy-9-sulfooctadecaneperoxoic acid, 9-sulfooctadecaneperoxoic acid, 11-sulfoundecaneperoxoic acid, 10,11-disulfoundecaneperoxoic acid, 8-(3-octyloxiran-2-yl)-8-sulfooctaneperoxoic acid, 9,10-dihydroxy-11-sulfooctadecaneperoxoic acid, 8-(3-octyloxiran-2-yl)-11-sulfooctaneperoxoic acid, 9-hydroxy-10-sulfooctadecaneperoxoic acid, 10-sulfooctadecaneperoxoic acid, 9,10-disulfooctadecaneperoxoic acid, 10-sulfoundecaneperoxoic acid, and the like.

Regardless of the pathway by which the peracid is generated, the use solution preferably includes from about 600 ppm to about 3050 ppm of the peracid, from about 950 ppm to about 2500 ppm of the peracid, from about 900 ppm to about 1100 ppm, or from about 2250 ppm to about 2600 ppm of the peracid.

### Peroxide

The compositions typically also include a peroxide constituent, particularly for equilibrium-based peracid systems. Hydrogen peroxide in combination with the percarboxylic acid provides antimicrobial action against microorganisms. Additionally, hydrogen peroxide can provide an effervescent action which can irrigate any surface to which it is applied. An advantage of hydrogen peroxide is the food compatibility of this composition upon use and decomposition. For example, combinations of peroxyacetic acid, and hydrogen peroxide result in acetic acid, water, and oxygen upon decomposition, all of which are food product compatible.

Many oxidizing agents can be used for generating peroxycarboxylic acids. Suitable oxidizing agents, in addition to hydrogen peroxide, include inorganic and organic peroxides, such as, salts of perborate, percarbonate, and persulfate, percarbonic acid, and ozone. Hydrogen peroxide is generally preferred for several reasons. After application of the H₂O₂/peroxycarboxylic acid germicidal agent, the residue left merely includes water and an acidic constituent.

In some embodiments that are not based on an equilibrium reaction between a carboxylic acid and a peroxide, the composition is free or substantially free of a peroxide.

### Adjuvants

The antimicrobial composition of or employed in the disclosed methods can also include any number of adjuvants. Specifically, the composition can include stabilizing agents, wetting agents, hydrotropes, thickeners, foaming agents, chelating agents, builders, pH adjusters, among any number of constituents which can be added to the composition. Such adjuvants can be preformulated with the composition or added to the system simultaneously, or even after, the addition of the composition. The composition can also contain any number of other constituents as necessitated by the application.

### Stabilizing Agents

The compositions may optionally include components such as stabilizing agents, particularly those suitable for stabilizing peroxygen compounds or peroxycarboxylic acids. Such stabilizers include organic chelating compounds that sequester metal ions in solution, particularly most transition metal ions, which would promote decomposition of any peroxygen compounds therein. Typical complexing agents include organic amino- or hydroxy-polyphosphonic acid complexing agents (either in acid or soluble salt forms), carboxylic acids, hydroxycarboxylic acids, or aminocarboxylic acids.

Chelating agents or sequestrants generally useful as stabilizing agents include salts or acids of (expressed in acid form) dipicolinic acid, picolinic acid, gluconic acid, quinolinic acid, and alkyl diamine polyacetic acid-type chelating agents such as ethylenediamine tetraacetic acid (EDTA), hydroxyethylethylene diamine triacetic acid (HEDTA), and ethylene triaminepentaacetic acid, acrylic and polyacrylic acid-type stabilizing agents, phosphonic acid, and phosphonate-type chelating agents among others. Preferable sequestrants include phosphonic acids and phosphonate salts including 1-hydroxy ethylidene-1,1-diphosphonic acid (CH₃C(PO₃H₂)₂OH)(HEDP); ethylenediamine tetrakis methylenephosphonic acid (EDTMP); diethylenetriamine pentakis methylenephosphonic acid (DTPMP); cyclohexane-1,2-tetramethylene phosphonic acid; amino[tri(methylene phosphonic acid)]; (ethylene diamine[tetra methylene-phosphonic acid)]; 2-phosphene butane-1,2,4-tricarboxylic acid; as well as the alkyl metal salts, ammonium salts, or alkyloyl amine salts, such as mono, di, or tetra-ethanolamine salts.

Commercially available food additive chelating agents include phosphonates sold under the trade name DEQUEST® including, for example, 1-hydroxyethylidene-1,1-diphosphonic acid, available from Monsanto Industrial Chemicals Co., St. Louis, Mo., as DEQUEST® 2010; amino(tri(methylenephosphonic acid)), (N[CH2PO3H2]3), available from Monsanto as DEQUEST® 2000; ethylenediamine[tetra(methylenephosphonic acid)] available from Monsanto as DEQUEST® 2041; and 2-phosphonobutane-1,2,4-tricarboxylic acid available from Mobay Chemical Corporation, Inorganic Chemicals Division, Pittsburgh, Pa., as Bayhibit AM.

The above-mentioned phosphonic acids can also be used in the form of water soluble acid salts, particularly the alkali metal salts, such as sodium or potassium; the ammonium salts or the alkylol amine salts where the alkylol has 2 to 3 carbon atoms, such as mono-, di-, or triethanolamine salts. If desired, mixtures of the individual phosphonic acids or their acid salts can also be used.

### Buffering Agents

The compositions may optionally include buffering agents to stabilize the pH of an antimicrobial solution. The compositions might include buffering adjuvants such as weak inorganic acids, organic acids, organic salts, and inorganic salts for buffering purposes. These might include an inorganic-based salt or weak inorganic acids including phosphates (including mono-, di-, or tri-basic potassium, calcium, or sodium phosphate), sulfates (including sodium, potassium, and magnesium sulfates), bisulfates, silicates (including sodium, potassium, and magnesium silicates), borates (including sodium or potassium borates, and boric acid), sulfamic acid; organic-based compounds such as malic acid, tartaric acid, citric acid, acetic acid, glycolic, glutamic acid, sorbic acid, benzoic acid, adipic acid, succinic acid, diacetate salts, or dimer and fatty acids; or mixtures thereof.

Some additional acids or salts include aliphatic or olefinic carboxylic acids or carboxylate salts, aromatic carboxylic acids or carboxylic salts, inorganic acids or salts, polymeric carboxylic acids or carboxylate salts, organic-phosphonates, organic-phosphates or their salts, organic-sulfonates, organic-sulfates or their salts, organic boric acids or salts, amino acids or salts, or mixtures thereof. Most preferably the buffer includes carboxylic acids, di/tri-carboxylic acids, hydroxy carboxylic acids, or alpha-hydroxy carboxylic acids- or their salts, anhydride, or esters-such as glycolic, lactic, malic, citric, tartaric, acetic, diacetate, butyric, octanoic, heptanoic, nonanoic, decanoic, malonic, adipic, succinic, salicylic, fumaric, maleic, acetoacetic, oxalacetic, pyruvic, α-ketoglutaric, and so forth. Preferably mild acids are used.

The composition at use dilution has a pH of from about 1 to about 6, preferably 2 to about 5, and most preferably 2.6 to about 4.6.

### Thickening agents

In some embodiments, thickening agents are included in the compositions. The thickening agents aid to increase droplet size of the solutions when applied with spray applicators. The solutions are generally applied to sugar cane outdoors. Larger droplet size reduces the amount of solution that is blown by wind. Appropriate thickening agents for use in the solutions of the present disclosure include food grade thickeners. Specific examples of food grade thickening agents include xantham gum, guar gum, arrowroot, cornstarch, katakuri starch, potato starch, tapioca, sago, alginin, locust bean gum, collagen, gelatin, agar, carrageenan pectin, cellulose, gum Arabic, and the like.

### Other antimicrobial compositions

In some embodiments, the compounds may include one or more non-peracid antimicrobial compounds. Other biocides that may be applied separately or in combination with peroxycarboxylic acids include quaternary ammonium compounds, preferably the quaternary ammonium compounds that have been approved for use as food contact sanitizers. More preferably, quaternary ammonium compounds that are approved for directed food additive, such as ethyl lauryl arginate are selected. Other biocides include electrolyzed water, essential oils with antimicrobial efficacy, ozonized water generated onsite, chlorine dioxide, and octanoic acid. Preferred biocides include hydrogen peroxide, octanoic acid, silver-containing compounds, and sodium hypochlorite.

Other antimicrobials that could be added to the solutions of this disclosure include bactericides, phages, and bacteriocins. Chemicals typically used to control microorganisms in sugar mills may also be applied to the freshly harvested sugar cane. Such chemicals include disodium cyanodithiomidocarbonate, ethylenediamine, potassium N-methyldithiocarbamate, disodium ethylenebisdithiocarbamate, sodium dimethyldithiocarbamate, potassium N-methyldithiocarbamate, 2,2-Dibromo-3-nitrilopropionamine, benzyl ammonium chlorides, and combinations thereof.

### Exemplary Formulations

The following tables provide exemplary formulations for peracid-containing antimicrobial compositions that are effective for reducing sucrose degradation in harvested sugar cane. In addition to the ingredients provided in these tables, the adjuvants described above can be added in some embodiments.

The preferred compositions include concentrate compositions and use compositions. Typically, an antimicrobial concentrate composition can be diluted, for example with water, to form an antimicrobial use composition. In a preferred embodiment, the concentrate composition is diluted into water employed for spraying harvested sugar cane.

A preferred antimicrobial concentrate composition can be prepared according to the proportions described in Table 1. After combining the ingredients in these proportions, certain ingredients, such as the acetic acid and hydrogen peroxide, react to form peroxyacetic acid.

**Table 1: Initial Concentrate Composition**

| **Ingredient** | **1^{st} Exemplary Range** | **2^{nd} Exemplary Range** | **3rd Exemplary Range** |
|---|---|---|---|
| Carboxylic acid | 20-70 wt-% | 30-60 wt-% | 40-50 wt-% |
| Peroxide | 5-30 wt-% | 10-25 wt-% | 15-20 wt-% |
| Chelating Agent | 0-10 wt-% | 0.1-5 wt-% | 0.5-1.5 wt-% |

By about two weeks after combining, the reaction of these ingredients has approached equilibrium. That is, the relative amounts of one or more of peroxyacetic acid, acetic acid, and hydrogen peroxide will be roughly constant. The equilibrium amount will be affected by decomposition or other reaction, if any, of any labile species. A preferred antimicrobial concentrate composition produces an equilibrium mixture having the proportions described in Table 2.

**Table 2: Equilibrium Concentrate Composition (after approximately 2 weeks)**

| **Ingredient** | **1^{st} Exemplary Range** | **2^{nd} Exemplary Range** | **3rd Exemplary Range** |
|---|---|---|---|
| Carboxylic acid | 5-60 wt-% | 20-45 wt-% | 30-35 wt-% |
| Peroxycarboxylic acid | 4-30 wt-% | 8-24 wt-% | 12-18 wt-% |
| Peroxide | 5-30 wt-% | 8-20 wt-% | 10-15 wt-% |
| Chelating Agent | 0-10 wt-% | 0.1-5 wt-% | 0.5-1.5 wt-% |

The compositions also include antimicrobial use compositions. Preferred antimicrobial use compositions include the amounts of ingredients listed in Table 3 with a balance of water. In some embodiments, the concentrate compositions of Tables 1 and 2 are diluted by 1:50-2000 with water. The concentrate compositions may be diluted by water or other solvents at a rate of 1:75-1:750 or 1:125-1:400. Different dilutions of a concentrate composition can result in different levels of the components of the use composition, generally maintaining the relative proportions. For example, a use composition can have concentrations twice, one half, or one quarter those listed below in Table 3.

**Table 3: Equilibrium Diluted Use Composition**

| **Ingredient** | **1^{st} Exemplary Range (ppm)** | **2^{nd} Exemplary Range (ppm)** | **3rd Exemplary Range (ppm)** | **4^{th} Exemplary Range (ppm)** |
|---|---|---|---|---|
| Carboxylic acid | 1250-6300 | 1950-5150 | 1800-2200 | 4700-5400 |
| Peroxycarboxylic acid | 600-3050 | 950-2500 | 900-1100 | 2250-2600 |
| Peroxide | 450-2250 | 700-1850 | 650-800 | 1650-1950 |
| Chelating Agent | 0-200 | 65-165 | 60-70 | 150-170 |

### Method of Use

Methods include applying the above-described compositions to sugar cane after harvesting. The use solution is applied to the cut sugar cane within a short period of time following harvest. For example, the use solution can be applied in the field or during transportation. Application of the compositions prevents degradation of sucrose within the sugar cane while the cane is being transported to a mill for processing, thereby increasing the sucrose yield.

The compositions can be applied to the cut sugar cane in any way that allows the peracid-containing antimicrobial composition to contact the portions of the cane exposed when the cane is cut during harvesting. The cane is particularly susceptible to microbial contamination at cut sites. The bacteria accesses the cane juice and thus the sucrose through the weak points at those cuts. By applying the composition to the susceptible sites on the cut cane, the metabolic activity of the environmental bacteria can be reduced thus decreasing the amount of sucrose that is converted to dextran. Example methods of application include foaming, misting, spraying, brushing, pouring, dousing, dunking, submerging, and the like. In preferred embodiments, the diluted use solution is sprayed onto freshly cut sugar cane. Spraying can provide relatively even coverage of the cane surface while minimizing the amount of composition used.

Applying the composition to cut cane as opposed to living cane is preferred. Sugar cane stalks are shrouded in leaves prior to being cut and harvested, preventing access to the sucrose-containing portions of the plant. The leaves prevent adequate exposure of any treatment chemistry that could be applied to the plant while still growing. Additionally, a much greater supply of chemical solution would be required to adequately cover the surface area of an intact plant. Waiting to treat the cane until after cutting allows for the exposed cut surface to be directly treated. The antimicrobial compositions described here do not exhibit sustained effects, so the compositions are only applied when treatment is needed. Thus applying the composition before harvest would result in either ineffective treatment or the solution would have to be applied immediately before harvest.

In some embodiments, the dilute use composition is sprayed onto freshly cut sugar cane by hand. Much of the world's sugar cane crop is harvested manually with machetes or other means of cutting the stalks of the cane near the ground. The freshly cut cane can be treated within minutes by using a handheld spraying device or backpack spraying device. Such devices generally include a reservoir for containing solution which is in fluid connection with a spray wand. Pressure is applied to the reservoir by a manual pump or by motorized means, which allows for the solution to be expelled from the wand in a mist or spray. Handheld spraying devices use smaller reservoirs that are carried by a person in one hand with the wand in the other hand. Alternatively, smaller handheld spraying devices may have a reservoir that is directly connected to the spraying apparatus for one-handed use. Trigger spray attachments may be used with small reservoirs of solution. Backpack spraying devices strap the reservoir to the back of a person and a spraying wand is connected to the reservoir. The person uses one or two hands to operate the spraying wand.

In one method of manual harvesting, sugar cane is cut with machetes. The pieces of cane are stacked in rows so that the cut ends are facing outwards. A person with a spraying device can easily spray solution on the ends of the cut sugar cane by walking along the row of piled sugar cane. For large quantities of sugar cane that is harvested manually, it may be preferable to use a backpack sprayer such as those made by MATABI or STIHL.

Alternatively, the use solutions can be applied manually to cut sugar cane by quickly submerging the cane in a receptacle containing the use solution in order to coat the cane surface. The cane can remain in the solution until it reaches the mill or it can be moved to another receptacle after the surface of the cane is coated in the solution.

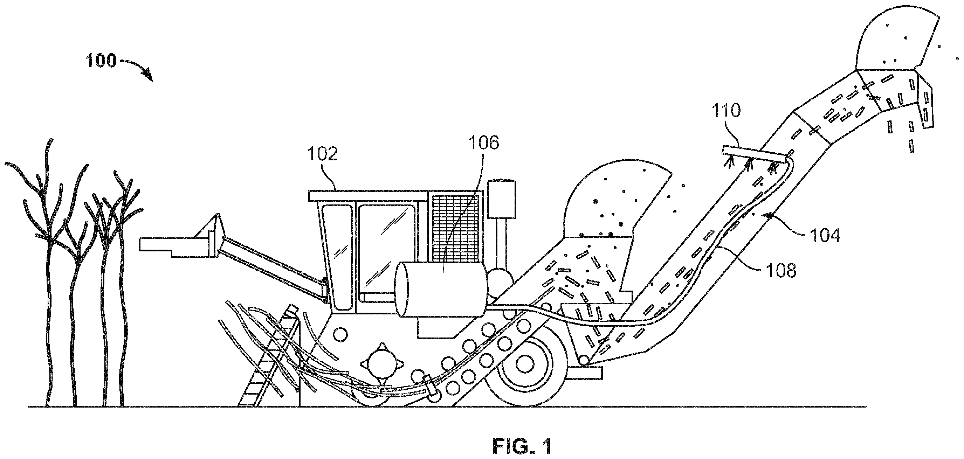

In other embodiments, the dilute use composition is applied to cut sugar cane that is harvested mechanically. Harvesters cut the sugar cane and chop the cane into smaller pieces. The cane pieces are then deposited into a trailer for transport to a mill. A spraying system, such as that depicted in the diagram of FIG. 1 can be assembled on the harvester to apply the use composition onto the cane immediately after it is cut.

In the example system 100 of FIG. 1, a sugar cane harvester 102 has an elevator 104 for transporting freshly cut sugar cane into a receptacle such as a cane wagon. An antimicrobial solution reservoir 106 is affixed to the sugar cane harvester 102 and contains antimicrobial solution. A fluid line 108 connects the antimicrobial solution reservoir 106 to a spraying apparatus 110. A pumping system (not shown) provides pressure to the reservoir 106 to force the antimicrobial solution through the fluid line 108 and out of the spraying apparatus 110. In some embodiments the spraying apparatus 110 is affixed to the harvester's elevator 104 in order to spray the antimicrobial solution onto the freshly cut sugar cane before it is transported into a cane wagon.

The antimicrobial compositions are applied to harvested sugar cane within a short period of time in order to most effectively prevent microbial contamination and degradation of sucrose. In exemplary embodiments, the compositions are applied after cutting the cane within up to 48 hours, within up to 24 hours, within up to 12 hours, within up to 4 hours, within up to 2 hours, within up to 30 minutes, within up to 15 minutes, within up to 5 minutes, within up to 2 minutes, within up to 1 minute, and within up to 30 seconds. In some embodiments, the compositions are applied to the sugar cane within 1 second to 24 hours, 2 seconds to 8 hours, 3 seconds to 2 hours, 0.001 seconds to 20 minutes, 0.01 seconds to 12 minutes, 0.1 seconds to 8 minutes, 0.5 seconds to 3 minutes, 0.1 seconds to 30 minutes, 1 second to 15 minutes, 5 seconds to 5 minutes, or 15 seconds to 1 minute of cutting the cane.

The antimicrobial compositions must contact the sugar cane for a length of time sufficient to prevent microbial contamination. The sugar cane may be contacted with the composition for periods of time that are longer than needed to treat the microbial contamination. For example, the antimicrobial composition may be in contact with the sugar cane for the entire duration of time that the cane is being transported to a mill for processing. For example, in some embodiments, the sugar cane is contacted with the antimicrobial composition for a period of time lasting from 2 seconds to 72 hours, 5 seconds to 36 hours, 5 seconds to 12 hours, 10 seconds to 6 hours, 10 seconds to 2 hours, 30 seconds to 6 hours, 30 seconds to 45 minutes, 1 minute to 3 hours, 1 minute to 20 minutes, 5 minutes to 1 hour, 5 minutes to 15 minutes, or 10 minutes to 30 minutes. The compositions do not require rinsing from the sugar cane.

The antimicrobial compositions may be applied to the harvested sugar cane in more than one application. In some instances, it may be beneficial to apply the composition more than once if the time between harvest and processing is particularly lengthy. For example, if the sugar cane is treated with a use solution within 30 minutes of harvest, but will travel for at least 48 hours before arriving at a mill for processing, additional use solution may be applied to the sugar cane while the cane is in transit. In some embodiments, antimicrobial compositions are applied to harvested sugar cane every 24 hours, every 12 hours, every 6 hours, every 3 hours, or every hour as the cane is transported to a mill to maximize sucrose yields.

### EXAMPLES

### Example 1

A field experiment was conducted to determine whether application of a peracid composition to freshly cut sugar cane impacted sucrose yield. A first test group consisted of ten transportation carts filled with freshly harvested cane. The harvested sugar cane in these transportation carts was treated with a 100 ppm peracid solution by pumping the solution through a hose and manually spraying the harvested cane with this solution. A second test group consisted of ten transportation carts filled with freshly harvested cane. This second test group of transportation carts was not treated with a peracid solution. Both groups of sugar cane were within the same field and were harvested at the same time.

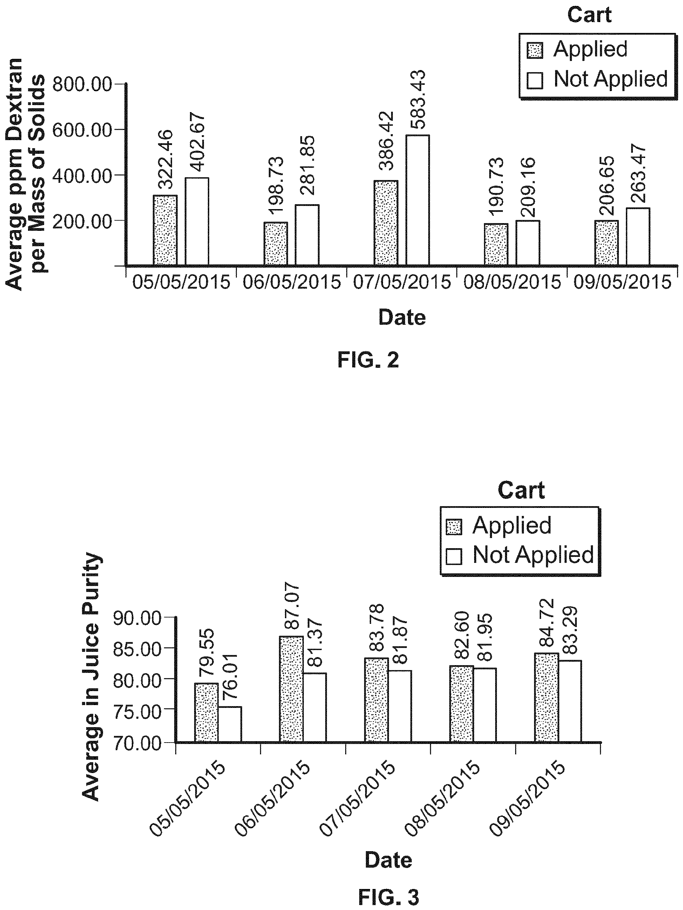

From these 20 transportation carts, several tests were performed on representative samples of cane upon delivery to the processing mill. The quantity of dextran per unit mass was recorded and the amount was compared between the first test group for cane treated with peracid and the second test group for untreated cane. The results are summarized in Table 6 and shown in FIG. 2. Levels of dextran were consistently lower in sugar cane that had peracid composition applied than the untreated sugar cane. Lower dextran levels result in higher sucrose yields.

**Table 6: dextran produced in mg/Kg of solid mass**

| **Date** | **Treated** | **Untreated** | **Difference** |
|---|---|---|---|
| 05/05/2015 | 322.46 | 402.67 | (80.21) |
| 06/05/2015 | 198.73 | 281.85 | (83.13) |
| 07/05/2015 | 386.42 | 583.43 | (197.01) |
| 08/05/2015 | 190.73 | 209.16 | (18.43) |
| 09/05/2015 | 206.65 | 263.47 | (56.82) |
| **Average** | **261.00** | **348.12** | (87.12) |

Next, the purity of the sugar cane juice extracted from the cane was examined to determine if application of the peracid composition had an effect. Table 7 and FIG. 3 illustrate the results. The purity of cane juice derived from sugar cane treated with the peracid composition was consistently higher than sugar cane that was untreated.

**Table 7: Percent purity of sucrose in sugar cane juice**

| **Date** | **Treated** | **Untreated** | **Difference** |
|---|---|---|---|
| 05/05/2015 | 79.55 | 76.01 | 3.54 |
| 06/05/2015 | 87.07 | 81.37 | 5.70 |
| 07/05/2015 | 83.78 | 81.87 | 1.92 |
| 08/05/2015 | 82.60 | 81.95 | 0.65 |
| 09/05/2015 | 84.72 | 83.29 | 1.43 |
| **Average** | **83.55** | **80.90** | 2.65 |

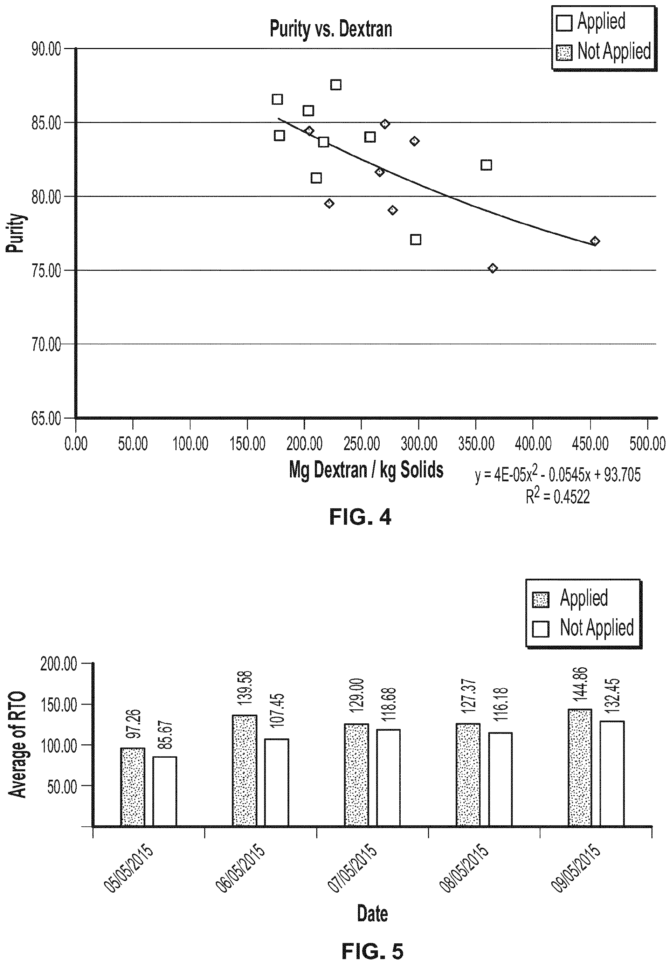

FIG. 4 illustrates a scatter graph showing purity plotted against dextran amount for treated vs. untreated sugar cane. It is observed that the carts in which the composition was applied show the lowest values of dextran and the highest values of juice purity. Inversely, carts which were not treated show higher values of dextran and lower purity values.

Next the yield in Kg sugar per tonne of sugar cane was recorded. Again, the yield was consistently higher in sugar cane which was treated with the peracid composition. Results are shown in Table 8 and Figure 5.

**Table 8: yield in Kg sugar per tonne cane**

| **Date** | **Treated** | **Untreated** | **Difference** |
|---|---|---|---|
| 05/05/2015 | 97.26 | 85.67 | 11.59 |
| 06/05/2015 | 139.58 | 107.45 | 32.13 |
| 07/05/2015 | 129.00 | 118.68 | 10.32 |
| 08/05/2015 | 127.37 | 116.18 | 11.18 |
| 09/05/2015 | 144.86 | 132.45 | 12.40 |
| **Average** | **127.61** | **112.09** | 15.52 |

Finally, an analysis demonstrating recovery of sugar yields was conducted. This demonstrates an improvement in yield potential of cane delivered to a mill for processing. On average, there is a potential increase of recovery of sugar of between 0.83 Kg/tonne to 7.30 Kg/tonne with an average of 3.39 kg/tonne as shown in Table 9.

**Table 9: Sugar Recovery in kg/tonne**

| **Date** | **Treated** | **Untreated** | **Difference in Purity** | **Recovered Sugar** |
|---|---|---|---|---|
| 05/05/2015 | 79.55 | 76.01 | 3.54 | 4.53 kg/Tonne |
| 06/05/2015 | 87.07 | 81.37 | 5.70 | 7.30 kg/Tonne |
| 07/05/2015 | 83.78 | 81.87 | 1.92 | 2.45 kg/Tonne |
| 08/05/2015 | 82.60 | 81.95 | 0.65 | 0.83 kg/Tonne |
| 09/05/2015 | 84.72 | 83.29 | 1.43 | 1.83 kg/Tonne |
| **Average** | **83.55** | **80.90** | 2.65 | **3.39 kg/Tonne** |

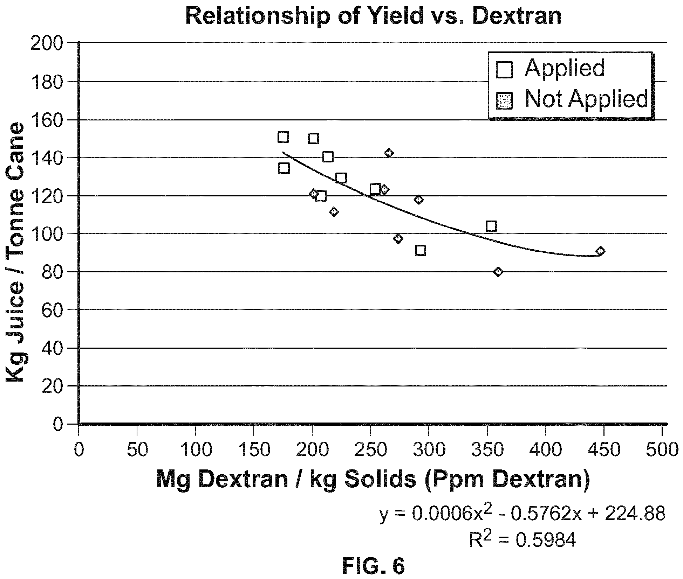

FIG. 6 illustrates a scatter graph plotting the amount of dextran against the amount of cane juice. It is observed that the higher yield is obtained from cane with lower dextran content.

There is evidence indicating that applying the peracid composition in the field to freshly cut sugar cane and antimicrobial treatment in mills improves the reduction in purity between the primary and diluted juices. A decrease in dextran improves the juice purity and yield. Treating cane with a peracid solution reduces the bacterial growth rate in the cane, as evidenced by finding smaller amounts of dextran on sugar cane that was treated as compared to untreated cane harvested at the same time.

### Example 2

A second field experiment was performed to evaluate the yield improvement benefits achieved by treating freshly harvested sugar cane with a peracid solution.

Several mechanized harvesters were adapted with an automated dispensing system to apply a 2400ppm peracid solution to freshly harvested sugar cane at a rate of application of about 1.8 L peracid solution per tonne of sugar cane harvested. Additional harvesters were not modified with this dispensing equipment and did not apply peracid solution to harvested sugar cane. Sugar cane treated with peracid solution, and cane not treated with peracid solution, were harvested from the same fields, but collected in separate transportation carts and delivered to the processing mill.

Representative samples of harvested sugar cane were collected upon delivery to the processing mill, and tested for sucrose yield potential to determine impact of the peracid solution application via mechanized harvester. This experiment was performed over the course of several weeks to demonstrate effect throughout a harvest season.

On average, the peracid treatment on freshly harvested sugar cane enabled an increase in sucrose yield of 2.14 Kg sucrose per tonne cane harvested. This relates to about a 1.66% increase in sucrose yield from the same amount of harvested sugar cane. To add relevance to this figure, the country of Guatemala produced about 2.82 million tonnes of sugar in 2016. According to one calculation, if even 20% of the total harvested sugar cane was treated as described in this example, an additional 12,091 tonnes of sugar could have been produced from the same amount of harvested sugar cane. At an average wholesale market price of white sugar in Guatemala of about 14.28 USD per 100 lbs. sugar, this equates to a potential gross revenue increase of about 3,806,416 USD for one year.

While certain embodiments have been described, other embodiments may exist. While the specification includes a detailed description, the invention's scope is indicated by the following claims. Furthermore, while the specification has been described in language specific to structural features and/or methodological acts, the claims are not limited to the features or acts described above. Rather, the specific features and acts described above are disclosed as illustrative aspects and embodiments of the invention. Various other aspects, embodiments, modifications, and equivalents thereof which, after reading the description herein, may suggest themselves to one of ordinary skill in the art without departing from the spirit of the present disclosure or the scope of the claimed subject matter.

## Claims

1. A method of increasing sucrose yield from harvested sugar cane, the
method comprising:
applying a peracid antimicrobial composition to the cut sugar cane, the peracid antimicrobial composition comprising:
from about 1250 to about 6300 ppm carboxylic acid;
from about 600 to 3050 ppm peroxycarboxylic acid;
from about 450 to about 2250 ppm peroxide;
from about 0 to about 150 ppm chelating agent and
water.

2. The method of claim 1, wherein the peracid antimicrobial composition further comprises additional agents selected from chelating agents, organic solvents, sanitizers, antimicrobial agents, magnesium, rheological, pH modifiers, preservatives, processing aids, or other functional ingredients

3. The method according to claim 1 or 2, wherein the peracid antimicrobial composition is applied to the cut sugar cane within up to 2 hours of harvesting.

4. The method according to claim 1 or 2, wherein the peracid antimicrobial composition is applied to the cut sugar cane within up to 15 minutes of harvesting.

5. The method according to any one of claims 1 to 4, wherein the peracid antimicrobial composition comprises:
from about 1950 to about 5150 ppm carboxylic acid;
from about 950 to 2500 ppm peroxycarboxylic acid;
from about 700 to about 1850 ppm peroxide;
from about 65 to about 165 ppm chelating agent; and
water.

6. The method according to any one of claims 1 to 5, wherein the carboxylic acid is selected from the group consisting of formic acid, acetic acid, propionic acid, heptanoic acid, octanoic acid, nonanoic acid, decanoic acid, benzoic acid, and salicyclic acid.

7. The method of claim 6, wherein the carboxylic acid comprises acetic acid.

8. The method of claim 7, wherein the carboxylic acid further comprises octanoic acid.

9. The method according to any one of claims 1 to 8, wherein the peroxycarboxylic acid comprises peroxyacetic acid, peroxyoctanoic acid, or a mixture thereof.

10. The method according to any one of claims 1 to 9, wherein the peroxide comprises hydrogen peroxide.

11. The method according to any one of claims 1 to 10, wherein the chelating agent comprises phosphonic acid.

12. The method according to any one of claims 1 to 11, wherein the peracid antimicrobial composition further comprises a thickening agent selected from the group consisting of xantham gum, guar gum, arrowroot, cornstarch, katakuri starch, potato starch, tapioca, sago, alginin, locust bean gum, collagen, gelatin, agar, carrageenan pectin, cellulose, and gum Arabic.

13. A system for increasing sucrose yield in sugar cane comprising:
a sugar cane harvester having an elevator;
an antimicrobial solution reservoir affixed to the sugar cane harvester, the antimicrobial solution reservoir containing an antimicrobial solution that inhibits degradation of sucrose; and
a spraying apparatus in fluid connection with the antimicrobial solution reservoir attached to the elevator.

14. The system of claim 13, wherein the antimicrobial solution is selected from the group consisting of quaternary ammonium compounds, electrolyzed water, essential oils with antimicrobial efficacy, ozonized water generated onsite, chlorine dioxide, peracids, hydrogen peroxide, silver-containing compounds, phages, bacteriocins, enzymes, and sodium hypochlorite.

15. The system of claim 13, wherein the antimicrobial solution comprises:
from about 1800 to about 2200 ppm acetic acid;
from about 900 to 1100 ppm peroxyacetic acid;
from about 650 to about 800 ppm hydrogen peroxide;
from about 60 to about 70 ppm phosphonic acid chelating agent; and
water.

16. The system of claim 13, wherein the antimicrobial solution comprises:
from about 4700 to about 5400 ppm acetic acid;
from about 2250 to about 2600 ppm peroxyacetic acid;
from about 1650 to about 1950 ppm hydrogen peroxide;
from about 150 to about 170 ppm phosphonic acid chelating agent; and
water.

17. The system according to any one of claims 13 to 16, wherein the antimicrobial solution further comprises a thickening agent.

18. The system according to claim 15 or 16, wherein the antimicrobial solution further comprises an additional carboxylic acid and peroxycarboxylic acid.

19. The system according to any one of claims 13 to 17, wherein the antimicrobial solution further comprises an additional antimicrobial agent selected from the group consisting of disodium cyanodithiomidocarbonate, ethylenediamine, potassium N-methyldithiocarbamate, disodium ethylenebisdithiocarbamate, sodium dimethyldithiocarbamate, potassium N-methyldithiocarbamate, 2,2-Dibromo-3-nitrilopropionamine, and benzyl ammonium chlorides.
